Europäisches Patentamt

European Patent Office

Office européen des brevets

(19)

(11) **EP 1 107 133 A1**

(12) **EUROPEAN PATENT APPLICATION**

(43) Date of publication:
**13.06.2001 Bulletin 2001/24**

(51) Int Cl.⁷: **G06F 17/30**

(21) Application number: **00204386.7**

(22) Date of filing: **07.12.2000**

| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **08.12.1999 NL 1013793**<br><br>(71) Applicant: **Eidetica B.V.**<br>**1098 SM Amsterdam (NL)** | (72) Inventor: **Groenink, Annius Victor**<br>**1017 ET Amsterdam (NL)**<br><br>(74) Representative: **Brookhuis, Hendrik Jan Arnold**<br>**van Exter Polak & Charlouis B.V.**<br>**P.O. Box 3241**<br>**2280 GE Rijswijk (NL)** |

(54) **Document search system with automatic field selection and field controlled document ranking**

(57)     A document search system comprising data storage means, that contains at least a metadata collection having a collection of three-tuples (<metadata>, <fieldtype-id>, <document-idlist>), which metadata collection is obtained from a collection of documents and is composed of a number of fields, whereby a fieldtype-identifier <fieldtype-id> is assigned to each field, and in which metadata collection each three-tuple indicates that for all documents in the non-empty list of document identifiers <doc-id-list> the element <metadata> is metadata of a field identified by <fieldtype-id>.

Further the search system comprises a search algorithm with a matching algorithm having as input a query, which query comprises at least an enumeration of pairs ((<target>, <weight>), <fieldtype-idlist>), in which pairs <weight> is a real number on the interval [0;1], and which matching algorithm has the metadata collection as input, and compares per <fieldtype-id> the values of <metadata> to the values of <target> in the query and includes <weight> in the comparison, and which matching algorithm has as output a relevance collection comprising three-tuples (<target>, <fieldtype-id>, <doc-idlist>), which relevance collection contains per unique combination of <metadata> and <fieldtype-id> a list of document identifiers <doc-idlist> in which the identifiers identify documents that are considered sufficiently relevant with respect to the query by the matching algorithm.

Figure 1

Printed by Jouve, 75001 PARIS (FR)

EP 1 107 133 A1

**Description**

The present invention relates to a document search system according to the preamble of claim 1.

Metadata is data that describes a document, divided into a number of fields per document. Examples of field types are author name, title, date of issue. Metadata may consist per field of individual words, or several mutually related words in a row (for instance, a nominal part of a sentence). A common method for producing metadata is the so-called full-text indexing method (Salton, G. and McGill, M.J.; *Introduction to Modern Information Retrieval.* McGraw-Hill, New York, 1983). In full-text indexing each word in the document is used as an index term, barring words in a list of words considered to be not distinctive (such as the articles and prepositions). The indexes obtained in this manner are recorded in one field of the metadata collection. Apart from full-text indexing there exist methods that automatically identify concept designations in documents, instead of individual words. Sometimes not only the concepts used in the documents are identified from the document and added to the metadata, but also concepts closely related to the former concepts. The latter concepts are, for example, identified in a thesaurus *(ISO 2788, Documentation - Guidelines for the establishment and development of monolingual thesauri.* Geneva: International Organization for Standardisation. 1986). Other metadata than those describing the subjects of the document, such as the date of issue, are usually assigned by hand.

Matching algorithms are well known, in several variants. Examples are Boolean matching and matching according to the vector space model (Salton, G. and McGill, M.J., see above). A matching algorithm creates a relevance value for each document, which value predicts the relevance of the document with respect to the query of a user. Some matching algorithms produce binary relevance values. Other matching algorithms calculate a value in an interval, and rank the documents on the basis of these values. The number of relevant documents is than determined as the number of documents that score a relevance value above a preset boundary value.

A query is a string comprising one or more pairs (<target>,<weight>), possibly connected by operators. A query is evaluated by the matching algorithm as a function of the resemblance of its targets to the metadata, taking into account the weights. An example of an operator in a query is the Boolean conjunction. A weight is a number indicating the relative importance of the corresponding target in the query. Typically this number is chosen on the interval [0;1] whereby the value 1 indicates that the target is of high importance.

A target is a string comprising one or more terms, possibly connected by operators. A target is matched by the matching algorithm as a function of the similarity of its terms with the metadata. An example of an operator in a term is the Boolean disjunction. A target itself may also contain a weight for each term, indicating the importance of the term in the target.

A term is a string without operators, that can be matched with the metadata according to a function that calculates the similarity (according to a given criterion) between term and metadata. A simple example of such a function is the identity function; this function matches a term if the term is identical to metadata in a field.

A system as described in the preamble of the main claim has been applied for some time, for example in the well-known Dialog search system (called Dialog Classic nowadays, and originating from The Dialog Corporation in London). Dialog and similar search systems offer a user the possibility of searching with or without a selected search field type; in the absence of a selection by the user, the system searches all search field types (from a fixed subset of field types, the so-called basic index). In response to the query the matching algorithm presents the user, via a display, the data from the collection of relevance values. The Dialog search system allows the user to obtain the information (<fieldtype-id>,<number of hits>) per field type, but per field type the query has to be re-entered. The user may use the data obtained in this laborious manner for the creation of a refined query; the Dialog system itself does not use this information (apart from showing it to the user).

Dialog and similar known search systems have the disadvantage that the user needs to make a selection by himself, from the search field types that can be used in the query. The user will often select all field types, or a more or less arbitrary subcollection thereof, since it is not known beforehand which field type leads to the most useful result. Once the user has made a selection, the query is matched by the search algorithm and the relevance list thus obtained is shown on a display. Subsequently the user may make a manual selection from the field types, based on the information shown after the matching. By making this selection the user is enabled to create a refined query and to have this matched subsequently by the search algorithm. This is a mentally demanding method, since it requires the user to recognise and select the relevant information in all the information shown.

Additionally, from the American patent US 5 983 216 a search system is known in which on the basis of matching a list of metadata a document collection is selected automatically from a number of document collections. It is true that the document collections may thereby be regarded as subcollections of the entire collection that can be identified by a search field, but these subcollections are, according to the description in said patent, stored in physical separation from each other, and provided with separate search systems with corresponding separated lists of metadata. Accordingly, the automatic selection of the document collection(s) by metadata occurs with the intention of continuing the search process in at least one of the individual search systems (and its corresponding metadata collection) and not with the intention to make a (further) selection on the basis of information obtained by matching and dealing with other search fields than the one indicating the document collection. Searching by field types is unusual in the application area of Infoseek: the World Wide Web. As far as this is applied, the same disadvantage holds as mentioned for Dialog.

The invention aims at the removal of the disadvantage mentioned above. For this purpose, the invention provides a document search system according to the claim 1.

The system according to the invention shows less irrelevant information than a system according to the state of the art does. The information that is filtered out and thus not shown is not important for the effectiveness of the user's search process. This irrelevant information comprises in the first place the three-tuples for which the list of document identifiers is an empty collection, thus the combinations of target and field type for which no relevant documents were identified. In addition, this information comprises the three-tuples each having a list of document identifiers identical to the list of document identifiers of the entire document collection, thus the combinations of target and field type for which all documents were considered relevant. By not showing these two kinds of three-tuples, the user will be distracted less by irrelevant information and will find with less mental effort the information needed for effectively operating the search system.

In advantageous embodiments the pairs (<target>,<weight>), <field type-id>) in the list shown are sorted according to <fieldtype-id>, according to an increasing length or according to a decreasing length of the list of document identifiers of each of the pairs mentioned. Such a sorting considerably simplifies the user's task of recognising the for him interesting field types in the list shown, since the field types that yield only few relevant documents are either all in the beginning or all in the end of the list, and as such draw more attention. Specifically these field types are often selected for a subsequent query.

In an advantageous embodiment the user is enabled to change each of the elements <field type id-list> of the pairs ((<target>,<weight>), <field type id-list>) in the query, via the input means, without a change of one of the elements (<target>,<weight>). This has as advantage that the user is enabled to make the search algorithm search with fields of a different type without having to re-enter the entire query. This reduces the number of acts as well as the required mental effort.

In a further advantageous embodiment the search algorithm sets, after showing the filtered relevance collection, automatically all the field types present in the metadata collection for each combination (<target>,<weight>) in <field type id-list>, in response to an addition via the input means of at least one target in the query. After an addition of a target, the user will usually search again in all field types, and only after that he will want to select one or a few field types. In this embodiment the resetting to all field types is automatically done, and therefore reduces the number of acts and the mental effort required.

Further it is advantageous to have shown via the output means all the document identifiers that are present in the filtered relevance collection, sorted by criteria based on the data given by the relevance collection on the individual field metadata. As such, the documents having the highest predicted relevance can be arranged on top of the list, and therefore easily be distinguished from the other documents.

The sorting thereby is advantageously done according to one of the function values r1, r2, r3, and r4 as defined in the claims 7 through 9 and the description.

With regard to the measures of claim 9 it is noted that the field length may be calculated differently in each search system. If the notion of term is defined as a single word, the field length equals the number of words in the field. If the notion of term is defined as the words indicating a concept, the field length equals the number of concepts in the field. In the latter case, one may as well choose to count only the disjunctive notions as well as to include partial concepts of composed concepts, which thus partly coincide. The concept 'linear algebra' then counts at least twice, viz. once as algebra and once as linear algebra.

It is particularly advantageous to sort not according to a single criterion as mentioned above, but according to a staged sorting algorithm in which the number of stages is at least two and in which one or more of the at least two stages is sorted on the basis of one of the above function values r1, r2, r3, and r4. Staged sorting algorithms on the basis of a comparison function are well-known (Kernighan, B.W. and Ritchie, D.M. (1988), "Qsort", the C programming language. Prentice-Hall. Englewood Cliffs, New Jersey). Their working principle is based on the repeatedly pairwise sorting of the documents in an iterating process, whereby each time a single criterion is applied. In each comparison in which this criterion does not provide a distinction, a second criterion is tried. This switching to a next criterion can be continued until the number of criteria equals the number of stages. This manner of sorting is known for its high effectiveness, and the effectiveness also holds when the sorting is applied in a search system according to the invention.

In such a manner of sorting, documents yielding values highly dissimilar to the search criteria are arranged entirely at the beginning of the sorted list. As such, they draw more attention, and the user is enabled to judge their relevance, without having to assess an entire list of documents. These documents are often all highly relevant or all highly irrelevant.

It is thereby also advantageous if the user is allowed to set the order of the stages in the staged sorting, before the matching occurs. The system hereby advantageously makes a suggestion with respect to the setting of the order of the staged sorting.

The filtered relevance collection may advantageously be reduced further, by applying a selection. This sometimes reduces the amount of shown and for the search process irrelevant information on the visual presentation means. Such a further reduction of the filtered relevance collection can be realised by assigning a value R to each of the three-tuples in the filtered relevance collection, which value R is a function of at least one of the function values r1, r2, r3, and r4 mentioned above, and by removing from the filtered relevance collection the three-tuples of which the value R is smaller than or equal to a preset boundary value. The assignment of a value to documents and the subsequent selection on the basis of a boundary value is known, as already mentioned above. However, this is not known in combination with the preceding automatic field type valuation according to the invention.

In a particular embodiment this further reduction is realised with a value of R that equals r1 and whereby the preset boundary value equals the sum of weights of the targets in the query. As such the same effect is obtained as in the Boolean conjunction operation between the targets.

In a next particular embodiment the value of R is set such that, when a query is matched periodically repeated, a number of newly matched documents arrive, whereby the number is estimated in advance. This approach is possible in a growing document collection, such as a collection of periodical issues, e.g., daily newspapers, weekly magazines, and monthly issued journals. In addition, this approach is advantageous in document collections that are frequently supplemented with new documents, such as collections of patent publications. Such a setting of R is possible by estimating according to the formula of claim 16.

The invention will now be explained further referring to the drawing. The drawing shows:

- in figure 1 a block diagram of a document search system according to the invention,
- in figure 2 an example of a query and a part of the corresponding relevance collection, presented with a layout resembling a layout that could be shown on a video display, and
- in figure 3 an example of a different part of the relevance collection of figure 2, viz. the sorted list of documents corresponding to the document identifiers in the relevance collection.

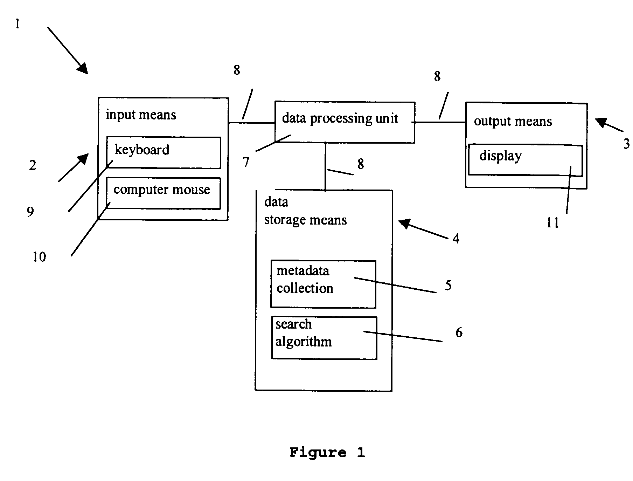

In figure 1 a search system 1 according to the invention is shown, comprising input means 2, output means 3 and data storage means 4, which data storage means 4 comprise at least a metadata collection 5 and a search algorithm 6. The input and output means 2,3, and the data storage means 4 are connected to a data processing unit 7 by data communication means 8, in such a manner that a computer system is provided on which the search algorithm according to the invention can be executed. The metadata collection contains data describing the documents of a document collection. Each of the documents in the collection is composed from a number of fields, among which are fields for title, author, year of issue, document content, ISBN-number, etc.

The input means 2 comprise in this example a keyboard 9 and a computer mouse 10. The output means 3 comprise graphical presentation means embodied by a display 11.

Additionally, but not shown in the figures, the data storage means 4 comprise an indexing algorithm as well as the document collection. These do not form part of the invention, but they are useful. The indexing algorithm was used to create the metadata collection, and can be used to renew this collection; this is necessary as soon as new documents are added to the collection. The document collection serves for showing the documents, once a user has selected these from a relevance collection obtained by matching his query in the search system.

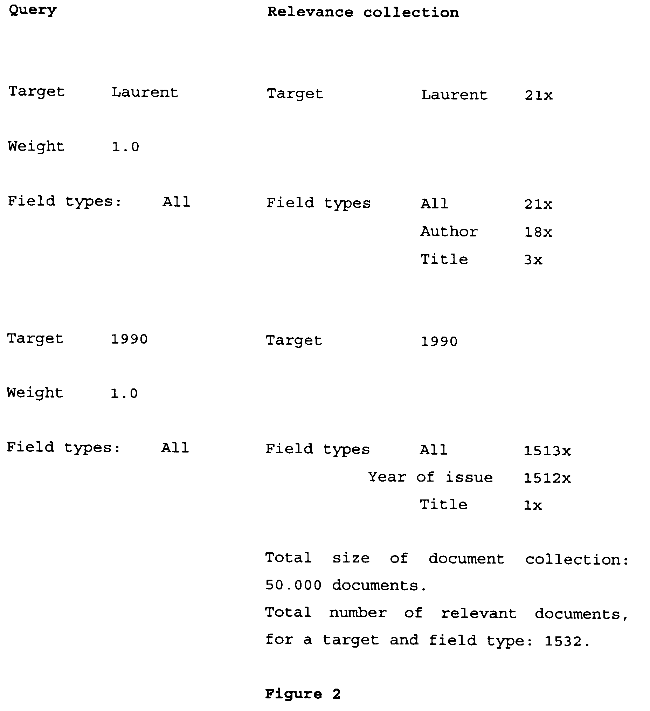

Figure 2 shows schematically a print of the graphical presentation means of the search system in figure 1. The total document collection comprises 50.000 documents. On the left side the query is shown; it has two targets: "Laurent" and "1990". Both weights in the query equal 1. Both targets must be matched in all field types (author, title, year of issue, publisher, ISBN-number, classification, library, etc). After the matching, which occurs on the command of a user, it is shown on the right side how many times each target is matched in a given field type. According to the invention, only some of the field types are shown, viz. the field types containing useful information for the user. The field types for which no documents are matched for a given target are not shown. Neither are the field types shown that yield all documents in the document collection as relevant documents in the matching process. Consequently for the target "Laurent" the field types "author" and "title" are shown and for the target "1990" the field types "year of issue" and "title". These field types are sorted according to a decrease of the corresponding numbers of matching document identifiers; such a sorting promotes the surveyability, esp. in the cases in which documents are matched in three or more field types.

For the user's information, the total size of the document collection as well as the total number of documents matched are shown. The user may formulate a refined query on the basis of the information shown on the relevance collection, by means of changing targets and/or field types in the left side of the display. Changing of the field types only can easily be realised on the basis of the information given on the number of documents matched for each field type. The addition of a target automatically leads to resetting the field type selection for the target to "all". However, the user may change this setting according to his own insights as well. The addition of a target is effected by a command, given by the user via the input means.

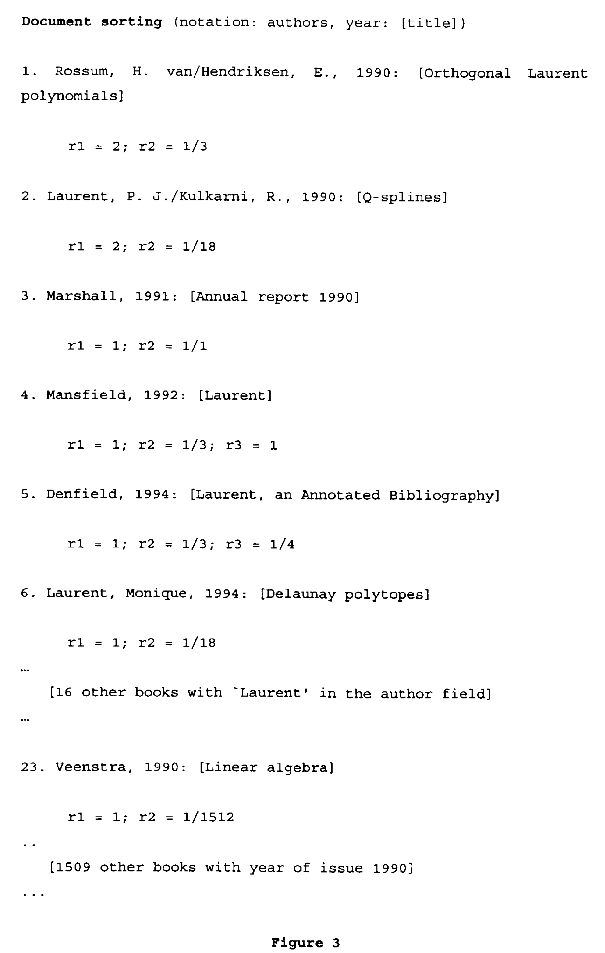

Figure 3 shown document data of the documents in the relevance collection, i.e., documents referred to in the document identifier list of the relevance collection. The documents are shown as a list sorted by relevance of the documents with respect to the query. The relevance is calculated according to a staged sorting algorithm, in which the sorting occurs by r1 first, by r2 next, and by r3 finally.

In this algorithm r1, r2, and r3 are defined as follows:

The function value r1 is defined by

$$r1(<doc-id>) = \sum_{\text{all pairs}(<\text{target}>,<\text{fieldtype-id}>)\text{ that yield <doc-id>}} (<weight>)_{target}$$

The function value r2 is defined by

$$r2(<doc-id>) = \underset{\substack{\text{all pairs} \\ (<\text{target}>,<\text{fieldtype-id}>) \\ \text{that yield }<\text{doc-id}>}}{Min} \frac{weight(<target>)}{(number\ of\ elements\ in <doc-idlijst>)_{target,fieldtype-id}}$$

The function value r3 is defined as

$$r3(<doc-id>) = \underset{\substack{\text{all pairs} \\ (<\text{target}>,<\text{fieldtype-id}>) \\ \text{that yield}<\text{doc-id}>}}{Max}\ weight(<target>) * f(<target>,<fieldtype-id>)$$

with

$$f(<target>,<fieldtype-id>) = \frac{<number\ of\ times\ that\ target<target>\ is\ matched\ in\ the\ field>}{<length\ of\ the\ field\ with\ fieldtype<fieldtype-id>\ measured\ in\ targets>}$$

This means that the most important criterion is: the sum of the number of weights of all the times that a document is matched (i.e., is considered relevant) in a combination of target and field type. Since the weights of both targets equal 1, this equals the number of times the document (at least its identifier) occurs in the relevance collection.

In figure 3 the values of r1, r2, and r3 are shown, as far as useful for the present illustration of the invention. It is clearly visible that for documents 1 and 2 the same value of r1 holds. Therefore these two documents are sorted according to r2, that has different values for these documents. For the documents 4 and 5 r1 as well as r2 have the same value, and therefore these documents are sorted by r3.

The search system according to the invention shown in the figures 1 to 3 spares the user mental effort by automatic selection and sorting of field types of the relevance collection to be shown, and by sorting the documents in the relevance collection. Additionally other measures according may increase the user's comfort even further.

According to one such additional measure the metadata collection comprises a field type for storing the date of addition of a document identifier to the metadata collection, such that, for each document, precisely one such date is assigned as <metadata> to the field of this type, and in which document search system the sorting occurs by the function value r4, in which

r4 (<doc-id>) = ((present date) - (date of addition of the document with <doc-id>)) / ((present date) - (date of addition of the oldest document in the document collection)).

According to another additional measure the sorting occurs by a staged sorting algorithm in which the number of stages is at least two and in which one of the at least two stages is sorted on the basis of one of the function values r1, r2, r3, and r4 mentioned above. Preferably the user is enabled to set the order of the stages in the staged sorting process.

In a further preferred embodiment the search algorithm makes a suggestion regarding the setting of the order of the staged sorting process according to the following rule:

if the query contains $\leq 4$ targets, then use function value r1 as the first stage, function value r2 as the second stage, function value r3 as the third stage, and function value r4 as the fourth stage,
if the query contains >4 targets, then use function value r2 as first stage, function value r1 as second stage, function value r3 as third stage, and function value r4 as fourth stage.

Another additional measure is characterised in that:

- to each of the three-tuples in the filtered relevance collection is assigned a value R, which value is a function of at least one of said function values r1, r2, r3, and r4, and
- the three-tuples for which the value R is smaller than or equal to a preset boundary value are removed from the relevance collection.

In combination with the above measure, a preferred embodiment is characterised in that R equals r1 and the preset boundary value equals the sum of the weights of the targets in the query.

Alternatively the value of R is set in such a manner that by periodically repeated matching of the query a chosen number of new documents arrives that is estimated in advance, whereby the estimation is made according to the formula

$$\text{Dnewly matched} = \frac{\text{Dtotal matched for R}}{\text{Dtotal}} * \text{Dgrow}$$

in which formula

Dnewly matched = the number of expected newly-matched documents in a time-interval t at given R,
Dtotal matched for R = the total number of document identifiers in the filtered relevance collection for R,
Dtotal = the total number of document identifiers in the metadata collection,
Dgrow = the number of document identifiers supplemented to the metadata collection during the time interval t.

**Claims**

1. Document search system (1), comprising:

- data storage means (4) comprising at least the following data:

    - a metadata collection (5) with a collection of three-tuples (<metadata>, <fieldtype-id>, <doc-id-list>), which metadata collection is obtained from a collection of documents and is composed of a number of fields, whereby a fieldtype-identifier <fieldtype-id> is assigned to each field, and in which metadata collection each three-tuple indicates that for all documents in the non-empty list of document identifiers <doc-id-list> the element <metadata> is metadata of a field identified by <fieldtype-id>, and
    - a search algorithm (6) comprising a matching algorithm having as input a query, which query comprises at least an enumeration of pairs ((<target>, <weight>),<fieldtype-idlist>), in which pairs <weight> is a real number on an interval [0;1], and which matching algorithm has the metadata collection as input, and compares per <fieldtype-id> the values of <metadata> to the values of <target> in the query and includes <weight> in the comparison, and which matching algorithm has as output a relevance collection comprising three-tuples (<target>, <fieldtype-id>, <doc-idlist>), which relevance collection contains per unique combination of <metadata> and <fieldtype-id> a list of document identifiers <doc-idlist> in which the identifiers identify documents that are considered sufficiently relevant with respect to the query by the matching algorithm,

- input means (3),
- output means (2), comprising at least visual presentation means,
- a data processing unit (7) connected by data communication means (8) to said data storage means, input means and output means, and controls these means and executes the search algorithm on a command given via the input means, in which search system

- the search algorithm presents an input area on the visual presentation means,
- in the input area a query can be entered by a user via the input means, in which query at each target the list of fieldtype identifiers <fieldtype-idlist> contains as preset all values of <fieldtype-id> present in the metadata collection, and at which input area a command can be given by the user for executing the matching algorithm, and
- whereby the search algorithm shows a part of the relevance collection in a listwise presentation on the visual presentation means sorted by target, in such a manner that for each pair (<target>, <fieldtype-id>) in the relevance collection at least a number of elements in the list of document identifiers <doc-idlist> is shown, **characterised in that**
- the matching algorithm removes from the relevance collection three-tuples in such a manner that a filtered relevance collection is obtained that contains only three-tuples in which the list of document identifiers <doc-idlist> is a non-empty collection, and in which the list of document identifiers <doc-idlist> is not identical to the list of document identifiers <doc-idlist> of the entire document collection.

2. Document search system according to claim 1, **characterised in that** the pairs (<target>, <weight>), <fieldtype-id>) in the list shown are sorted by <fieldtype-id>, according to an increasing length of the list of document identifiers of each of said pairs.

3. Document search system according to claim 1, **characterised in that** the pairs ((<target>, <weight>, <fieldtype-id>) in the list shown are sorted by <fieldtype-id>, according to a decreasing length of the list of document identifiers of each of said pairs.

4. Document search system according to one of the claims 1 - 3, **characterised in that** the user is allowed to change each of the elements <fieldtype-idlist> of the pairs ((<target>, <weight>), <fieldtype-id>) in the query via the input means, without a change in one of the elements (<target>, <weight>).

5. Document search system according to claim 4, **characterised in that** the search algorithm automatically sets all fieldtypes present in the metadata collection as standard setting for each (<target>, <weight>) in <fieldtype-idlist> after the filtered relevance collection is shown, in response to an addition via the input means of one or more targets in the query.

6. Document search system according to one of the claims 1 - 5, **characterised in that** all document identifiers present in the filtered relevance collection are shown by the output means sorted by relevance.

7. Document search system according to claim 6, **characterised in that** the the sorting occurs according to the function value r1, defined by

$$r1(< doc - id >) = \sum_{\text{all pairs}(<\text{target}>, <\text{fieldtype-id}>) \text{ that yield } <\text{doc-id}>}(< weight >)_{target}$$

8. Document search system according to claim 6, **characterised in that** the sorting occurs according to the function value r2, defined by

$$r2(< doc - id >) = \operatorname*{Min}_{\substack{\text{all pairs} \\ (<\text{target}>, <\text{fieldtype-id}>) \\ \text{that yield } <\text{doc-id}>}} \frac{weight(< target >)}{(number\ of\ elements\ in < doc - idlijst >)_{target, fieldtype-id}}$$

9. Document search system according to claim 6, **characterised in that**

- the relevance collection consists of three-tuples (<target>, <fieldtype-id>, <document data>) in which three-tuples <document data> is itself a list of three-tuples (<document-id>, <length of the field with fieldtype

<fieldtype-id> measured in targets>, <number of times the target <target> occurs in the field>), and

- the sorting takes place according to the function value r3, defined as

$$r3\ (< doc-id >) =$$

$$\underset{\substack{\text{all pairs} \\ (<\text{target}>, <\text{fieldtype-id}>) \\ \text{that yield} <\text{doc-id}>}}{Max}\ weight\ (< target >) * f\ (< target >, < fieldtype-id >)$$

with

$$f(< target >, < fieldtype\text{-} id >) = \frac{< number\ of\ times\ that\ target\ < target >\ is\ matched\ in\ the\ field >}{< length\ of\ the\ field\ with\ fieldtype\ < fieldtype\text{-} id >\ measured\ in\ targets >}$$

**10.** Method for searching documents using a document search system according to one or more of the preceding claims.

1

input means

keyboard

computer mouse

2

9

10

8

7

8

data processing unit

data
storage means

4

metadata
collection

5

search
algorithm

6

8

output means

display

3

11

**Figure 1**

| Query | | Relevance collection | | |
|---|---|---|---|---|
| Target | Laurent | Target | Laurent | 21x |
| Weight | 1.0 | | | |
| Field types: | All | Field types | All | 21x |
| | | | Author | 18x |
| | | | Title | 3x |
| Target | 1990 | Target | 1990 | |
| Weight | 1.0 | | | |
| Field types: | All | Field types | All | 1513x |
| | | | Year of issue | 1512x |
| | | | Title | 1x |

Total size of document collection: 50.000 documents.
Total number of relevant documents, for a target and field type: 1532.

**Figure 2**

**Document sorting** (notation: authors, year: [title])

1. Rossum, H. van/Hendriksen, E., 1990: [Orthogonal Laurent polynomials]

$r1 = 2$; $r2 = 1/3$

2. Laurent, P. J./Kulkarni, R., 1990: [Q-splines]

$r1 = 2$; $r2 = 1/18$

3. Marshall, 1991: [Annual report 1990]

$r1 = 1$; $r2 = 1/1$

4. Mansfield, 1992: [Laurent]

$r1 = 1$; $r2 = 1/3$; $r3 = 1$

5. Denfield, 1994: [Laurent, an Annotated Bibliography]

$r1 = 1$; $r2 = 1/3$; $r3 = 1/4$

6. Laurent, Monique, 1994: [Delaunay polytopes]

$r1 = 1$; $r2 = 1/18$

...

    [16 other books with `Laurent' in the author field]

...

23. Veenstra, 1990: [Linear algebra]

$r1 = 1$; $r2 = 1/1512$

..

    [1509 other books with year of issue 1990]

...

**Figure 3**

European Patent
Office

# EUROPEAN SEARCH REPORT

Application Number

EP 00 20 4386

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 826 260 A (BYRD JR ROY JEFFERSON ET AL) 20 October 1998 (1998-10-20) * column 3, line 39 - line 63 * --- | 1 | G06F17/30 |
| A | US 5 940 821 A (WICAL KELLY) 17 August 1999 (1999-08-17) * column 25, line 46 - column 27, line 33; figures 11A-12 * --- | 1 | |
| A | EP 0 889 419 A (MATSUSHITA ELECTRIC IND CO LTD) 7 January 1999 (1999-01-07) * page 3, line 22 - page 4, line 12; figures 1-3 * ----- | 1 | |
| | | | **TECHNICAL FIELDS SEARCHED (Int.Cl.7)** G06F |

The present search report has been drawn up for all claims

| Place of search | Date of completion of the search | Examiner |
|---|---|---|
| BERLIN | 15 March 2001 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 107 133 A1**

**ANNEX TO THE EUROPEAN SEARCH REPORT
ON EUROPEAN PATENT APPLICATION NO.**

EP 00 20 4386

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2001

| Patent document cited in search report | | Publication date | Patent family member(s) | | Publication date |
|---|---|---|---|---|---|
| US 5826260 | A | 20-10-1998 | NONE | | |
| US 5940821 | A | 17-08-1999 | NONE | | |
| EP 0889419 | A | 07-01-1999 | JP | 11025108 A | 29-01-1999 |

EPO FORM P0459

For more details about this annex : see Official Journal of the European Patent Office, No. 12/82

13